# EUROPÄISCHE PATENTSCHRIFT

(11) **EP 1 651 546 B1**
(45) Veröffentlichungstag und Bekanntmachung des Hinweises auf die Patenterteilung: **02.11.2006**
(21) Anmeldenummer: 05707050.0
(22) Anmeldetag: 28.01.2005
(51) Int. Cl.: B65G 1/137

(54) **ANLAGE UND VERFAHREN ZUM KOMMISSIONIEREN VON ARTIKELN IN AUFTRAGSBEHÄLTER**
SYSTEM AND METHOD FOR COMMISSIONING GOODS INTO ORDER CONTAINERS
INSTALLATION ET PROCEDE POUR LA PREPARATION D'ARTICLES DANS DES CONTENEURS DE COMMANDE

(30) Priorität: 17.03.2004 DE 102004014378
(43) Veröffentlichungstag der Anmeldung: 03.05.2006
(73) Patentinhaber: SSI Schäfer Peem GmbH, 8051 Graz (AT)
(72) Erfinder: SCHÄFER, Gerhard, 57290 Neunkirchen (DE)
(74) Vertreter: Wegener, Markus
(86) Internationale Anmeldenummer: PCT/EP2005/000824
(87) Internationale Veröffentlichungsnummer: WO 2005/097633

(56) Entgegenhaltungen:
- EP-A- 0 515 350
- DE-A1- 4 225 041
- DE-U1- 29 806 960
- FR-A- 2 603 260
- US-A- 5 983 648
- PATENT ABSTRACTS OF JAPAN Bd. 016, Nr. 366 (M-1291), 7. August 1992 (1992-08-07) & JP 04 116001 A (ITOKI KOSAKUSHO CO LTD), 16. April 1992 (1992-04-16)

## Beschreibung

Die vorliegende Erfindung betrifft eine Kommissionierverfahren sowie eine Kommissionieranlage zum Kommissionieren von Artikeln in Auftragsbehälter, mit einem Kommissionierplatz 10, der zumindest einen Kommissionierschacht aufweist, wobei erste Fördermittel so angeordnet sind, dass über den Kommissionierschacht direkt auf die ersten Fördermittel kommissionierte, einem Kommissionierauftrag zugeordnete Artikel in einen dem Kommissionierauftrag zugeordneten Auftragsbehälter förderbar sind.

Ein solches Kommissioniersystem ist auf der DE-A-4225041 bekannt.

Die vorliegende Erfindung betrifft ferner ein Kommissionierverfahren, bei dem an zumindest einem Kommissionierplatz Artikel über zumindest einen Kommissionierschacht in Auftragsbehälter kommissioniert werden, indem zu kommissionierende Artikel in den Kommissionierschacht gesammelt werden, mit den folgenden Schritten: Entleeren des Kommissionierschachts direkt auf das erste Fördermittel; Transportieren der entleerten Artikel zu einem Auftragsbehälter hin; und Übergeben der Artikel an den Auftragsbehälter.

Die vorliegende Erfindung betrifft allgemein eine Kommissionieranlage zum Kommissionieren von Artikeln in Auftragsbehälter, mit einem Kommissionierplatz, der zumindest einen Kommissionierschacht aufweist.

Die vorliegende Erfindung betrifft ferner allgemein ein Kommissionierverfahren, bei dem an einem Kommissionierplatz Artikel über zumindest einen Kommissionierschacht in Auftragsbehälter kommissioniert werden, in dem zu kommissionierende Artikel gesammelt werden können.

Eine solche Anlage und ein solches Verfahren sind allgemein bekannt.

Ferner sind Kommissionieranlagen, insbesondere Kommissionierplätze, bekannt, mit denen sog. Auftragsbehälter mit handhabbaren Waren bestückt werden können. Ein Auftragsbehälter ist ein Behälter, in den handhabbare Ware bzw. Artikel kommissioniert werden. Die Kommissionierung erfolgt üblicherweise entsprechend sog. Kommissionieraufträgen. Ein Kommissionierauftrag kann mehrere verschiedene Artikel umfassen, die gemäß dem Kommissionierauftrag in ein und denselben Auftragsbehälter zu kommissionieren sind. Jedem Auftragsbehälter ist mindestens ein Kommissionierauftrag zugeordnet.

Die tatsächliche Kommissionierung erfolgt üblicherweise an sog. Kommissionierplätzen. Als Kommissionierplatz wird ein Bereich bezeichnet, an dem eine Kommissionierperson gemäß den oben genannten Kommissionieraufträgen Artikel in bereitgestellte Auftragsbehälter kommissioniert. Die zu kommissionierenden Artikel werden dabei in sog. Lagerbehältern zum Kommissionierplatz transportiert. Ein Lagerbehälter ist ein Behälter, in dem zu kommissionierende Artikel gelagert werden. Diese Lagerung erfolgt üblicherweise sortenrein. Sortenrein bedeutet, dass ein einzelner Lagerbehälter jeweils nur einen einzigen Artikeltyp beinhaltet. Die Lagerbehälter können jedoch auch unterteilt sein, so dass verschiedene Artikeltypen in ein und demselben Lagerbehälter gelagert werden können.

Die Lagerbehälter selbst werden z.B. in einem sog. Regallager gelagert. Ein Regallager weist eine Vielzahl von Regalen auf. Die Lagerbehälter werden in den Regalen gelagert. Dazu weist jedes Regal eine Vielzahl von Lagerplätzen auf.

Zu einer Ein- und/oder Auslagerung der Lagerbehälter können u.a. sog. Regalförderzeuge (RFZ) oder Regalbediengeräte (RBG) benutzt werden. RFZs und RBGs können automatisch durch eine der Kommissionieranlage übergeordnete Steuereinheit, z.B. durch einen zentralen Großrechner, gesteuert werden. Sie sorgen für den Transfer der Lagerbehälter zwischen dem Lager und dem/den Kommissionierplatz/-plätzen. Sind die Wege zwischen dem Lager und dem Kommissionierplatz weit, können Förderstrecken, wie z.B. Rollenbahnen, Gurtbänder, Hängeförderer und ähnliches, eingesetzt werden. Solche sog. Lagerbehälter-Förderstrecken transportieren die Lagerbehälter zu dem Kommissionierplatz.

Mit solchen Kommissionieranlagen lässt sich das Kommissionierprinzip "Ware zum Mann" realisieren. Beim Prinzip "Ware zum Mann" werden die zu kommissionierenden Artikel direkt zu der Kommissionierperson transportiert. Somit kann sich die Kommissionierperson im Wesentlichen stationär am Kommissionierplatz aufhalten und muss keine langen Wege zum Kommissionieren zurücklegen.

Das Prinzip "Ware zum Mann" ist aus ergonomischer Sicht als äußerst positiv zu bewerten. Ergonomie spielt heutzutage auch bei der Gesetzesgebung eine immer bedeutendere Rolle, so dass an heutige Kommissionieranlagen strengste ergonomische Anforderungen gestellt werden. Dies erfordert jedoch oftmals einen erheblichen logistischen Aufwand, was den Transport der Lagerbehälter und Auftragsbehälter betrifft.

Die Planung der Kommissioniervorgänge in einem System der oben genannten Art ist äußerst komplex. So muss z.B. im voraus geplant werden, welcher Lagerbehälter zu welchem Zeitpunkt zu welchem Kommissionierplatz zu transportieren ist, um einen Kommissionierauftrag vollständig abarbeiten zu können.

Ein bekannte Einrichtung, um diesen Aufwand zu verringern und um die Kommissioniervorgänge effizienter, d.h. zum Beispiel schneller, zu machen, sind die sog. Kommissionierschächte. Ein Kommissionierschacht ist eine Art Behälter, der üblicherweise am Kommissionierplatz in Armreichweite der Kommissionierperson vorgesehen ist. Die Kommissionierperson kommissioniert Artikel von oben in eine obere offene Öffnung des Kommissionierschachts. An einem unteren Ende des Kommissionierschachts ist eine weitere verschließbare Öffnung vorgesehen, über die im Kommissionierschacht befindliche Artikel in einen unter dem Kommissionierschacht angeordneten Auftragsbehälter freigegeben werden können. Ein Kommissionierplatz mit einem solchen Kommissionierschacht wird später noch detailliert beschrieben werden.

Bei den bekannten Kommissionieranlagen hat es sich als nachteilig herausgestellt, dass Kommissionieraufträge in der Regel an einem einzigen Kommissionierplatz vollständig abgearbeitet werden müssen, wenn zu kommissionierende Artikel in Auftragsbehälter kommissioniert werden. So kann es zu Stauungen im Gesamtsystem kommen, wenn lediglich ein einziger Artikel fehlt, der zu einer Vervollständigung eines Kommissionierauftrags benötigt wird.

Um die Flexibilität des Gesamtsystems zu erhöhen, ist es bekannt, die Auftragsbehälter nicht an einem einzigen Kommissionierplatz vollständig zu kommissionieren. Sie werden lediglich teilweise kommissioniert. Der Transport von teilweise kommissionierten Auftragsbehältern von einem Kommissionierplatz zu einem anderen Kommissionierplatz kostet aber Zeit, erfordert zusätzliche Auftragsbehälter-Förderstrecken und ist somit teuer, wenig effizient und sehr planungsintensiv.

Ferner bedeutet die Installation von zusätzlichen Auftragsbehälter-Förderstrecken einen kostspieligen Materialaufwand und hohen Arbeitseinsatz.

Es ist daher eine Aufgabe der vorliegenden Erfindung, eine Anlage und ein Verfahren zum Kommissionieren von Artikeln in Auftragsbehälter zu schaffen, das effizient ist und die Kosten in einem überschaubaren Rahmen hält.

Diese Aufgabe wird durch eine Kommissionieranlage der eingangs genannten Art gelöst, wobei die ersten Fördermittel zum Unterteilen der ersten Fördermittel in eine Vielzahl von Abschnitten aufweisen, wobei jeder Kommissionierschacht jeweils einem einzigen Abschnitt zugeordnet ist.

Diese Aufgabe wird ferner durch ein Kommissionierverfahren der eingangs erwähnten Art gelöst, das die folgenden Schritte umfasst: Unterteilen des ersten Fördermittels in eine Vielzahl von Abschnitten und jedem Kommissionierschacht jeweils einen einzigen Abschnitt zuordnen.

Die vorliegende Erfindung entkoppelt so die Übergabe von zu kommissionierenden Artikeln an der Schnittstelle zwischen Kommissionierplatz und Auftragsbehälter. Indem die zu kommissionierenden Artikel zuerst auf erste Fördermittel kommissioniert werden, bevor sie anschließend in Auftragsbehälter gefördert werden, muss die Auftrags behälter-Förderstrecke nicht direkt im bzw. am Bereich des Kommissionierplatzes angeordnet sein. Die teilweise Kommissionierung an einem Kommissionierplatz wird vereinfacht.

Die zu kommissionierenden Artikel werden direkt über einen Schacht auf das erste Fördermittel kommissioniert. Diese Artikel, die entweder teilweise oder vollständig gemäß einem Kommissionierauftrag kommissioniert wurden, werden geordnet zu einen entsprechenden Auftragsbehälter transportiert.

Da die Auftragsbehälter somit nicht mehr zwingend am Kommissionierplatz vorbeigeführt werden müssen, können erhebliche Teile der Auftragsbehälter-Förderstrecke eingespart werden. Die oftmals recht schwierige Gestaltung der Auftragsbehälter-Förderstrecke am Ort des Kommissionierplatzes entfällt. Der Kommissionierplatz selbst benötigt insgesamt weniger Raum.

Kommissionieraufträge können auf mehrere Kommissionierplätze verteilt werden, die vorzugsweise parallel zueinander und sequentiell relativ zur Auftragsbehälter-Förderstrecke angeordnet sind. Das Gesamtsystem wird dynamischer. Die Planung wird flexibler. Die oben genannte Entkopplung steigert die Effizienz der Anlage.

Die Kommissioniergeschwindigkeit am Kommissionierplatz lässt sich merklich verbessern, da nicht mehr abgewartet werden muss, bis ein Auftragsbehälter vollständig kommissioniert ist, um abtransportiert werden zu können, bzw. bis der "richtige" Auftragsbehälter sich am Kommissionierplatz befindet, um einen Kommissionierauftrag abzuarbeiten.

Gemäß einer bevorzugten Ausführungsform der Erfindung weisen die ersten Fördermittel Mittel zur Transportsicherung auf.

Zum Beispiel sind Leisten als Transportsicherungsmittel vorteilhaft, da diese ein Vermischen der Artikel auf den ersten Fördermitteln verhindern. Artikel, die leicht ins Rollen geraten, können daran gehindert werden, von einem Bereich der ersten Fördermittel, der einem bestimmten Auftragsbehälter zugeordnet ist, in einen anderen Bereich zu rollen, der einem anderen Auftragsbehälter zugeordnet ist. Dies ist insbesondere dann von Bedeutung, wenn die ersten Fördermittel mit einer relativ hohen Geschwindigkeit bewegt werden, so dass bspw. Trägheitseffekte zu berücksichtigen sind, die bei der Abgabe der Artikel aus den "statischen" Kommissionierschächten auf die sich bewegenden ersten Fördermittel auftreten können.

Ferner lässt sich anhand der Transportsicherungsmittel kontrollieren, ob die auf die ersten Fördermittel kommissionierten Artikel richtig kommissioniert wurden, indem eine Kontrolleinrichtung, wie z.B. eine Videokamera, die Artikel auf den ersten Fördermitteln durch Bilderfassung mit anschließendem Vergleich kontrolliert. Die Kontrolleinrichtung kann an einer beliebigen Stelle zwischen dem Kommissionierplatz und einer Übergabestelle, bei der die Artikel von den ersten Fördermitteln in bereitstehende Auftragsbehälter abgegeben werden, z.B. senkrecht über den ersten Fördermitteln angeordnet sein.

Ferner ist es bevorzugt, wenn eine Vielzahl von Kommissionierplätzen vorgesehen ist und wenn zweite Fördermittel so angeordnet sind, dass Artikel von jeweiligen ersten Fördermitteln der Vielzahl von Kommissionierplätzen direkt auf den zweiten Fördermitteln gesammelt werden, um die gemäß einem einzigen Kommissionierauftrag gesammelten Artikel zu einem diesem Kommissionierauftrag zugeordneten Auftragsbehälter zu fördern.

Auf diese Weise ist eine noch bessere Entkopplung möglich. Die Länge der Auftragsbehälter-Förderstrecke kann weiter verkürzt werden, da mittels der zweiten Fördermittel erst die Artikel der jeweiligen ersten Fördermittel gesammelt werden, um sie dann an die Auftragsbehälter-Förderstrecke bzw. die Auftragsbehälter abzugeben.

Besonders von Vorteil ist es, wenn der Auftragsbehälter mittels einer Auftragsbehälter-Förderstrecke zu einem bzw. von einem Übergabeort hin bzw. weg förderbar ist, wobei sich der Übergabeort bei einer Schnittstelle zwischen den ersten Fördermitteln oder den zweiten Fördermitteln und der Auftragsbehälter-Förderstrecke befindet.

Gemäß einer weiteren bevorzugten Ausführungsform weisen die Fördermittel eine endlos umlaufende Förderbahn, insbesondere ein Gurtband, auf.

Mit einer endlos umlaufenden Förderbahn lassen sich hohe Transportgeschwindigkeiten erzielen. Die Installation einer endlos umlaufenden Förderbahn ist günstig, platzsparend und schnell zu bewerkstelligen. Der Wartungsaufwand bei Gurtbänder ist geringer als bei Rollenbahnen.

Ferner ist es von Vorteil, wenn die zu kommissionierenden Artikel in Lagerbehältern mittels einer Lagerbehälter-Förderstrecke zu dem Kommissionierplatz transportierbar sind.

Mit einer Lagerbehälter-Förderstrecke lassen sich hohe Transportgeschwindigkeiten realisieren. Die Kommissionierperson muss die Lagerbehälter nicht selbst zum Kommissionierplatz bringen, bzw. das Regallager abschreiten, um an den Inhalt der Lagerbehälter zu gelangen.

Eine weitere vorteilhafte Maßnahme ist, wenn an dem Kommissionierplatz ferner ein Lichtelement zum visuellen Anzeigen eines Quellorts und/oder eines Zielorts von zu kommissionierenden Artikeln sowie ein Anzeigeelement vorgesehen sind, das eine Anzahl zu kommissionierender Artikel visuell anzeigt.

Mit Hilfe eines Lichtelements lässt sich der Ort von Artikeln innerhalb eines Lagerbehälters, von dem zu kommissionierende Artikel zu entnehmen sind, genauestens lokalisieren. Die Kommissionierperson kann sofort erkennen, aus welchem Bereich des Lagerbehälters ein Artikel zu kommissionieren ist. Dies ist insbesondere dann von Vorteil, wenn der Lagerbehälter selbst in mehrere Bereiche unterteilt ist, so dass innerhalb ein und desselben Lagerbehälters mehrere Artikeltypen gelagert sind.

Ähnliches gilt für die Be- bzw. Ausleuchtung des Kommissionierschachts, insbesondere, wenn mehrere Kommissionierschächte am Kommissionierplatz angeordnet sind. Mit Hilfe des Lichtelements bekommt die Kommissionierperson eindeutig angezeigt, in welchen Kommissionierschacht der Vielzahl von Kommissionierschächten der gerade zu kommissionierende Artikel gegeben werden muss.

Mit Hilfe des Anzeigeelements bekommt die Kommissionierperson gleichzeitig zuverlässig und schnell die Anzahl der zu kommissionierenden Artikel angezeigt. Diese Maßnahmen fördern die Effizienz der Kommissionieranlage. Auch die Fehlerrate wird durch diese Maßnahmen reduziert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Seitenansicht eines Kommissionierplatzes gemäß dem Stand der Technik;
- Fig. 2: eine schematische Draufsicht auf eine Kommissionieranlage gemäß der vorliegenden Erfindung;
- Fig. 3: eine perspektivische Ansicht der Kommissionieranlage gemäß Fig. 2;
- Fig. 4: eine schematische Draufsicht auf eine weitere Ausführungsform der vorliegenden Erfindung, wobei die Kommissionieranlage mehrere Kommissionierplätze aufweist;
- Fig. 5: ein Lichtelement und ein Anzeigeelement, wie sie bei Kommissionierplätzen Verwendung finden, die Teil der Kommissionieranlage gemäß der vorliegenden Erfindung sind;
- Fig. 6: eine schematische perspektivische Ansicht auf einen Kommissionierplatz und insbesondere auf erste Fördermittel gemäß der vorliegenden Erfindung; und
- Fig. 7: eine weitere Ausführungsform der vorliegenden Erfindung, die ähnlich zu der Ausführungsform ist, die in Fig. 4 gezeigt ist.

Im Nachfolgenden werden identische Merkmale mit gleichen Bezugsziffern bezeichnet. Ein Kommissionierplatz im Zusammenhang mit der vorliegenden Erfindung wird immer mit dem Bezugszeichen 10 bezeichnet werden.

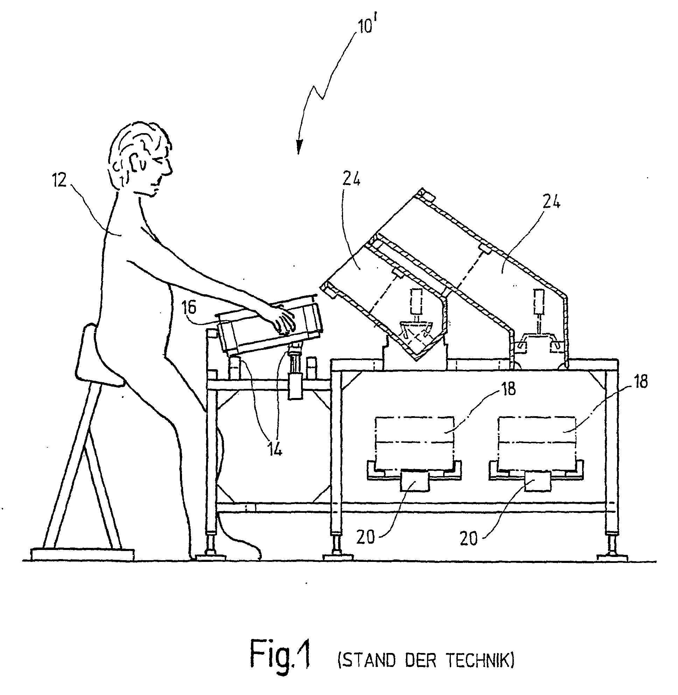

In Fig. 1 ist ein Kommissionierplatz 10' gemäß dem Stand der Technik zu sehen. Der Kommissionierplatz 10' wird von einer Kommissionierperson 12 bedient. Über eine Lagerbehälter-Förderstrecke 14 werden Lagerbehälter 16 zur Kommissionierperson 12 transportiert. Auftragsbehälter 18 werden mittels einer Auftragsbehälter-Förderstrecke 20 zum Kommissionierplatz 10' transportiert. Bei den Förderstrecken 14 und 20 kann es sich um sog. Rollenbahnen handeln.

Zwischen den Auftragsbehältern 18 und dem Lagerbehälter 16 können ein oder mehrere Kommissionierschächte 24 angeordnet sein. In der Fig. 1 erkennt man zwei Kommissionierschächte 24. Die Kommissionierschächte 24 weisen an ihrem jeweiligen unteren Ende einen Mechanismus auf, mit dem sich ein Boden des jeweiligen Kommissionierschachts 24 öffnen und schließen lässt. Der Kommissionierschacht 24, der in Fig. 1 näher zu der Kommissionierperson 12 angeordnet ist, ist in einem geschlossenen Zustand dargestellt. Der andere Kommissionierschacht 24 ist in einem geöffneten Zustand dargestellt.

Im Nachfolgenden wird ein herkömmlicher Kommissioniervorgang beschrieben.

Artikel (nicht gezeigt), die kommissioniert werden sollen, werden in Lagerbehältern 16 über die Lagerbehälter-Förderstrecke 14 zu dem Kommissionierplatz 10 transportiert. Leere Auftragsbehälter 18 werden mittels den Auftragsbehälter-Förderstrecken 20 unter den Kommissionierschächten 24 positioniert. Die Kommissionierperson 12 entnimmt zu kommissionierende Artikel aus den Lagerbehältern 16 und gibt sie entsprechend einem Kommissionierauftrag in einen oder beide Kommissionierschächte 24. Die Kommissionierschächte 24 befinden sich vorerst in ihrem geschlossenen Zustand. Sind alle zu kommissionierenden Artikel aus dem Lagerbehälter 16 entnommen, wird dieser Lagerbehälter 16 von dem Kommissionierplatz 10' wegtransportiert und ein neuer, anderer Lagerbehälter 16 mit anderen Artikeln wird zu dem Kommissionierplatz 10' transportiert. Die Kommissionierperson 12 kann einen anderen Artikel entnehmen und in einen der Kommissionierschächte 24 geben. Dieser Vorgang wiederholt sich so oft, bis ein Kommissionierauftrag vollständig abgearbeitet ist.

Wenn ein Kommissionierauftrag vollständig abgearbeitet ist, befinden sich alle zu diesem Kommissionierauftrag gehörenden Artikel in einem der Kommissionierschächte 24. In einem solchen Fall öffnet sich das untere Ende dieses Kommissionierschachts 24 und gibt die Artikel frei. Die Artikel fallen dann in den unter dem unteren Ende des Kommissionierschachts 24 bereitstehenden leeren Auftragsbehälter 18. Der so gefüllte Auftragsbehälter 18 wird anschließend unter Verwendung der Auftragsbehälter-Förderstrecke 20 abtransportiert und ein neuer, anderer Auftragsbehälter 18 wird an die Stelle des abtransportierten Auftragsbehälters 18 gebracht.

Natürlich ist es auch möglich, Kommissionieraufträge nur teilweise abzuarbeiten. Die nur teilweise bearbeiteten Auftragsbehälter 18 werden dann mittels der Auftragsbehälter-Förderstrecke 20 zu einem weiteren Kommissionierplatz 10 transportiert, wo sie weiterbearbeitet oder endgültig bearbeitet werden.

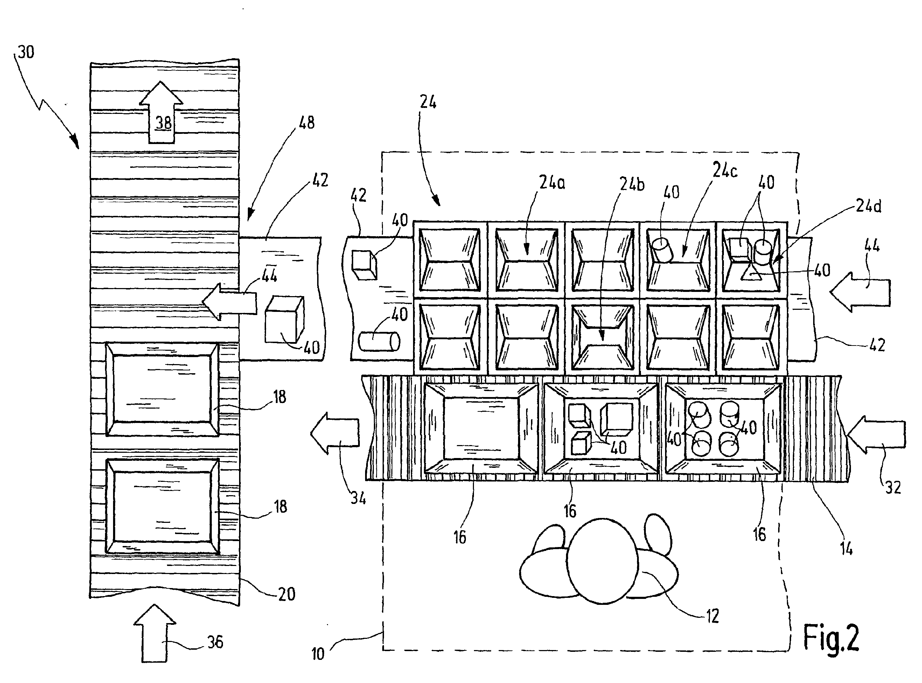

Fig. 2 zeigt eine schematische Draufsicht auf eine erste Ausführungsform einer Kommissionieranlage 30 gemäß der vorliegenden Erfindung.

Es ist ein ähnlicher Kommissionierplatz 10 wie in Fig. 1 vorgesehen, der von einer Kommissionierperson 12 bedient wird. Über eine Auftragsbehälter-Förderstrecke 20 werden der Kommissionieranlage 30 Auftragsbehälter 18 zugeführt (vgl. Pfeil 36) und abgeführt (vgl. Pfeil 38). Jedoch erfolgt dieser Transport nicht direkt in den Kommissionierplatz 10 hinein oder an ihm vorbei. Lagerbehälter 16 werden mittels einer Lagerbehälter-Förderstrecke 14, bei der es sich z.B. um eine Rollenbahn 14 handeln kann, direkt zum Kommissionierplatz 10 hin und weg transportiert (vgl. Pfeile 32, 34).

Ferner sind in Fig. 2 exemplarisch zehn Kommissionierschächte 24 dargestellt. Es können aber auch mehr oder weniger Kommissionierschächte 24 vorgesehen werden. Die Kommissionierschächte 24 sind hier in zwei übereinander angeordneten Reihen zu jeweils fünf Kommissionierschächten 24 angeordnet.

Mit dem Bezugszeichen 24a ist ein leerer, geschlossener Kommissionierschacht bezeichnet. Mit dem Bezugszeichen 24b ist ein leerer, geöffneter Kommissionierschacht bezeichnet. Mit dem Bezugszeichen 24c ist ein geschlossener Kommissionierschacht bezeichnet, in dem sich ein Artikel 40 befindet, der z.B. zylinderförmig ausgebildet ist. Mit dem Bezugszeichen 24d ist ein weiterer Kommissionierschacht bezeichnet, der mehrere Artikel 40 aufweist.

Leere Auftragsbehälter 18 werden mittels einer Auftragsbehälter-Förderstrecke 20 transportiert. Jedoch werden die leeren Auftragsbehälter 18 nicht unter die Kommissionierschächte 24 transportiert, wie es aus dem Stand der Technik bekannt ist. Unterhalb der Kommissionierschächte 24 ist hier z.B. eine Förderbahn 42 angeordnet, die in Richtung eines Pfeils 44 fördert. Bei der Förderbahn 42 handelt es sich vorzugsweise um ein endlos umlaufendes Gurtband. Das Gurtband 42 transportiert Artikel 40 von dem Kommissionierplatz 10 bzw. von den Kommissionierschächten 24 zu der Auftragsbehälter-Förderstrecke 20. Eine Schnittstelle bzw. ein Übergabeort zwischen dem Gurtband 42 und der Auftragsbehälter-Förderstrecke 20 wird mit dem Bezugszeichen 48 bezeichnet.

Nachfolgend wird ein Kommissioniervorgang in der Kommissionieranlage 30 gemäß der Erfindung erläutert.

Die Kommissionierperson 12 entnimmt Artikel 40 aus Lagerbehältern 16 und gibt sie in einen der Kommissionierschächte 24, der durch einen entsprechenden Kommissionierauftrag vorbestimmt ist. Befinden sich alle für die Abarbeitung eines Kommissionierauftrags erforderlichen Artikel 40 in diesem Kommissionierschacht 24, oder alle für die Abarbeitung eines Teilkommissionierauftrags erforderlichen Artikel 40, so wird dieser geöffnet und gibt diese Artikel 40 nach unten frei. Die Artikel 40 fallen auf das Gurtband 42 und werden in Richtung 44 von dem Kommissionierplatz 10 in Richtung des Übergabeorts 48 transportiert.

Gleichzeitig oder vorab wird ein leerer Auftragsbehälter 18 über z.B. eine Rollenbahn 20 zu dem Übergabeort 48 transportiert.

Die auf das Gurtband 42 gefallenen Artikel 40 werden bis an das Ende des Gurtbandes 42 transportiert, wo sie dann in den bereitstehenden leeren Auftragsbehälter 18 fallen.

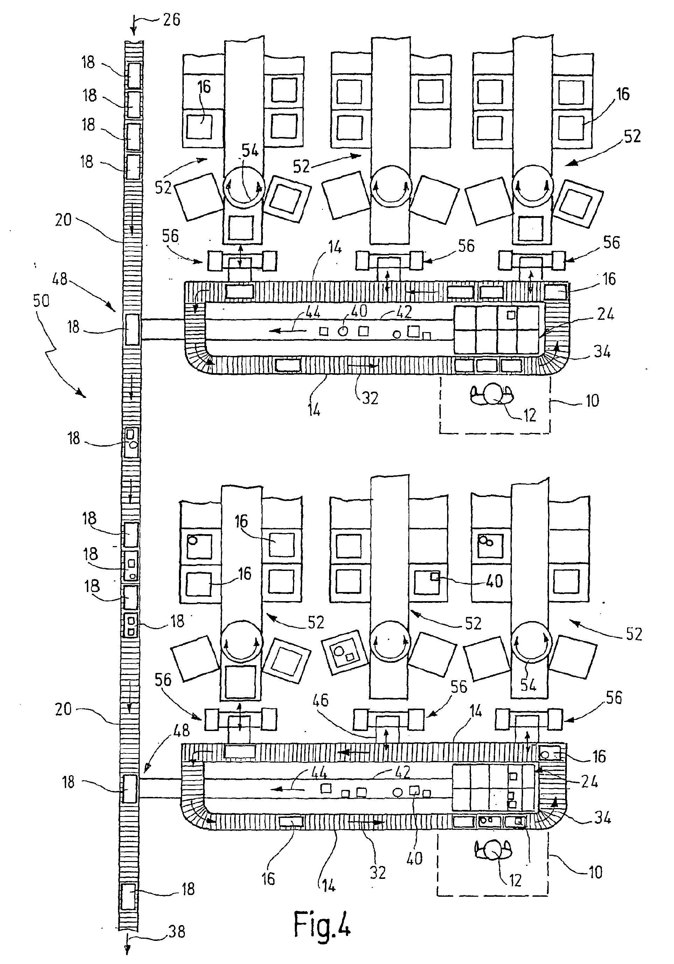

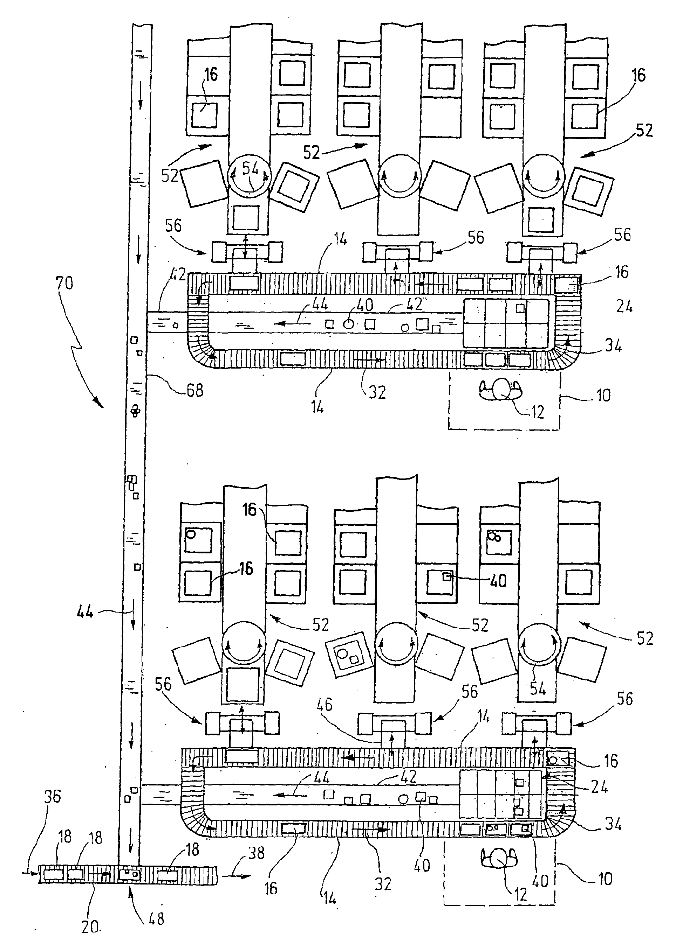

Es ist jedoch nicht zwingend erforderlich, dass der Auftragsbehälter 18 vollkommen leer ist. Es ist auch möglich, dass der Auftragsbehälter 18 bereits vorkommissioniert wurde, d.h. dass ein Teil des Kommissionierauftrags für diesen Auftragsbehälter bereits an einem anderen (nicht dargestellten) Kommissionierplatz 10 vorkommissioniert wurde. Eine solche Vorgehensweise wird detaillierter im Zusammenhang mit Figuren 4 und 7 erläutert werden.

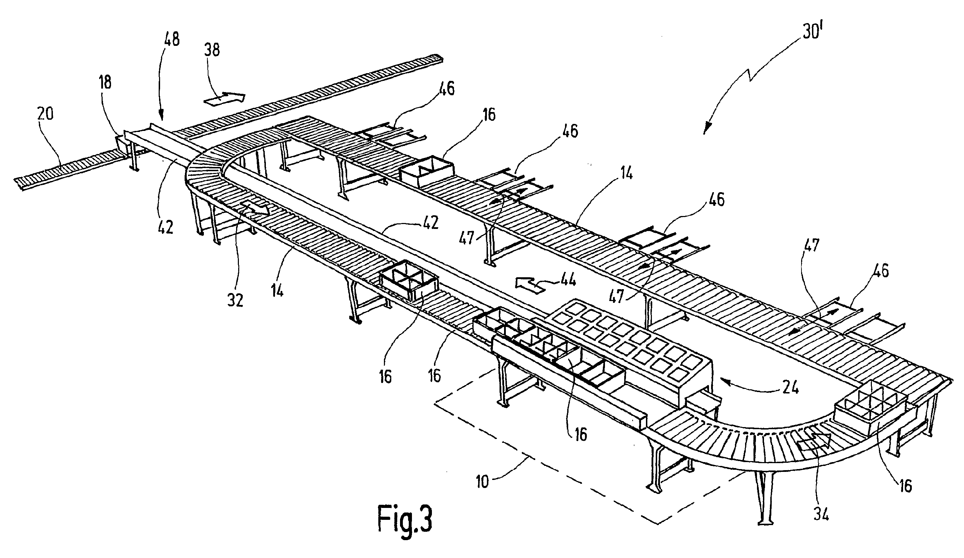

Die in Fig. 2 dargestellten Förderstrecken 14 und 20 sind jeweils nur abschnittsweise dargestellt. Einen besseren räumlichen Eindruck erhält man mit Fig. 3.

Fig. 3 zeigt schematisch eine perspektivische Ansicht eines Teils einer Kommissionieranlage 30' gemäß der vorliegenden Erfindung.

Die in Fig. 3 gezeigte Anordnung ist annähernd gleich der in Fig. 2 gezeigten Anordnung. Die Kommissionieranlage 30' der Fig. 3 unterscheidet sich insofern von der Kommissionieranlage 30 aus Fig. 2, dass hier insgesamt sechzehn, anstatt lediglich zehn, Kommissionierschächte 24 vorgesehen sind. Auch hat sich die Transportrichtung 32 bzw. 34 der Lagerbehälter 16 umgekehrt. Die Transportrichtung 36 bzw. 38 der Auftragsbehälter 18 ist jedoch gleich geblieben.

Bei der Kommissionieranlage 30' aus Fig. 3 erkennt man, dass die Lagerbehälter-Förderstrecke 14 die Form einer geschlossenen Schleife aufweist. Ferner sind an einem dem Kommissionierplatz 10 gegenüber liegenden Abschnitt der Lagerbehälter-Förderstrecke 14 mehrere Anschlüsse 46 dargestellt. Die Anschlüsse 46 verbinden die Lagerbehälter-Förderstrecke 14 mit einem (nicht dargestellten) Lagerregalbereich. Zwischen den Anschlüssen 46 und der Lagerbehälter-Förderstrecke 14 sind Mittel zum Ein- und Ausschleusen der Lagerbehälter 16 vorgesehen, mit deren Hilfe die Lagerbehälter 16 in Richtung eines Doppelpfeils 47 bewegt werden können. Auf diese Weise können Lagerbehälter 16 aus einem Lager geholt bzw. in das Lager zurückgegeben werden.

In Fig. 4 ist eine weitere Ausführungsform einer Kommissionieranlage 50 gemäß der vorliegenden Erfindung gezeigt.

Die Kommissionieranlage 50 ist ähnlich aufgebaut wie die der Fig. 3. Der in Fig. 3 dargestellte Teil ist in Fig. 4 doppelt abgebildet. Fig. 4 zeigt eine schematische Draufsicht auf die Kommissionieranlage 50.

Ferner sind in der Fig. 4 exemplarisch sog. Karusselllager 52 dargestellt. Es könnten auch andere Regaltypen, wie z.B. Hochregale mit RBGs benutzt werden.

Die Karusselllager 52 sind so angeordnet, dass sie mit den Anschlüssen 46 wechselwirken können, indem Lagerbehälter 16 ausgetauscht werden. Die Karusselllager 52 bestehen aus übereinander angeordneten Reihen aus Lagerplätzen für Lagerbehälter 16. Die Karusselllager 52 lassen sich sowohl gegen den Uhrzeigersinn als auch mit dem Uhrzeigersinn in der Zeichnungsebene der Fig. 3 drehen, wie es jeweils durch einen Pfeil 54 angedeutet ist. An einer Stirnseite der Karusselllager 52 kann ferner jeweils ein Vertikallift 56 angeordnet sein, um Lagerbehälter 16 aus verschiedenen Höhen der jeweiligen Regale abzuholen oder dort abzugeben.

Volle Behälter sind in Fig. 4 dunkel dargestellt. Leere Behälter sind in Fig. 4 hell dargestellt. Teilweise befüllte Behälter sind mit Artikeln 40 versehen dargestellt.

Man erkennt, dass die Kommissionieranlage 50 zwei Kommissionierplätze 10 aufweist, die jeweils von einer Kommissionierperson 12 bedient werden. Auf die oben beschriebene Weise werden Artikel 40 auf das Gurtband 42 gebracht. Das Gurtband 42 jedes Kommissionierplatzes 10 transportiert die kommissionierten Artikel 40 in Richtung einer Auftragsbehälter-Förderstrecke 20, die in der Fig. 4 am linken Rand dargestellt ist.

Die Zuführung 36 leerer Auftragsbehälter 18 erfolgt in Fig. 4 von oben. Die Auftragsbehälter 18 werden nach unten in Richtung des Pfeils 38 abtransportiert. Auf ihrem Transportweg passieren die Auftragsbehälter 18 in Fig. 4 zwei Übergabestellen 48. Es können jedoch auch Kommissionieranlagen mit mehr Kommissionierplätzen und mehr Übergabeorten konstruiert werden.

Eine erste Übergabestelle 48 wird von den Auftragsbehältern 18 in Höhe des oberen Kommissionierplatzes 10 passiert. Anschließend wird eine zweite Übergabestelle 48 passiert, die sich in Höhe des unteren Kommissionierplatzes 10 befindet. Bei der ersten Übergabestelle können Artikel 40, die sich auf dem Gurtband 42 des oberen Kommissionierplatzes 10 befinden, in einen vorzugsweise leeren Auftragsbehälter 18 abgegeben werden. Ein solcher Auftragsbehälter 18 kann so entweder vollständig oder teilweise kommissioniert werden. Der unterhalb der ersten Übergabestelle 48 gezeigte Lagerbehälter 18 ist z.B. lediglich teilweise kommissioniert worden und soll an der zweiten Übergabestelle 48 vollständig kommissioniert werden. Der in Transportrichtung davor positionierte Auftragsbehälter 18 wurde bereits vollständig durch den oberen Kommissionierplatz 10 kommissioniert. Es ist jedoch auch möglich, einen Auftragsbehälter 18 an der ersten Übergabestelle 48 vorbeizutransportieren, ohne Artikel 40 in diesen zu geben. Ein solcher, vollkommen leerer Auftragsbehälter 18 ist in der Fig. 4 an der zweiten, unteren Übergabestelle 48 gezeigt, die sich in Höhe des zweiten Kommissionierplatzes 10 befindet.

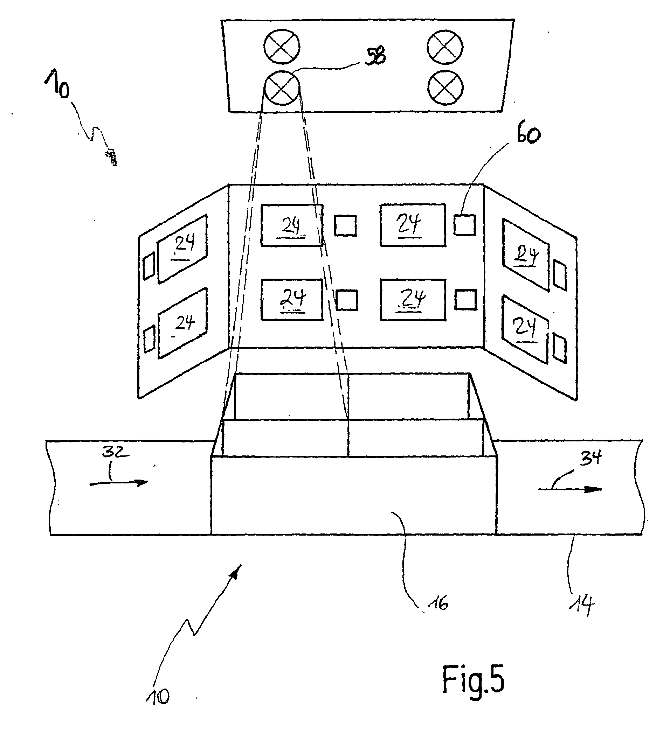

In Fig. 5 ist eine schematische Ansicht eines Teils eines Kommissionierplatzes 10 gemäß der vorliegenden Erfindung gezeigt.

In Fig. 5 wird ein in sich unterteilter Lagerbehälter 16 mittels der Lagerbehälter-Förderstrecke 14 in Richtung 32 zugeführt. Unter Verwendung eines Lichtelements 58, wie z.B. einem Laser, wird z.B. ein bestimmter Bereich des unterteilten Lagerbehälters 16 ausgeleuchtet. Auf diese Weise wird der Kommissionierperson angezeigt, aus welchem Bereich des Lagerbehälters 16 sie einen Artikel zu entnehmen hat. In diesem ausgeleuchteten Bereich befinden sich die zu kommissionierenden Artikel 40 (nicht gezeigt).

Ferner ist jedem Kommissionierschacht 24, wovon in der Fig. 5 acht vorgesehen sind, jeweils ein Anzeigeelement 60, wie z.B. eine LED-Anzeige, zugeordnet. Die LED-Anzeige gibt zum einen an, in welchen der Kommissionierschächte 24 die zu kommissionierenden Artikel zu geben sind. Zum anderen zeigt das Anzeigeelement 60 an, wie viele Artikel zu kommissionieren sind.

Alternativ kann auch nur ein einziges zentrales Anzeigeelement vorgesehen werden, das gut sichtbar angebracht ist. Dieses Anzeigeelement gibt dann jeweils die Anzahl der zu pickenden Artikel an. Die Schächte sind dann mit einer Leuchte versehen, durch deren Betätigung der Kommissionierperson angezeigt wird, in welchen der Schächte sie zu kommissionieren hat.

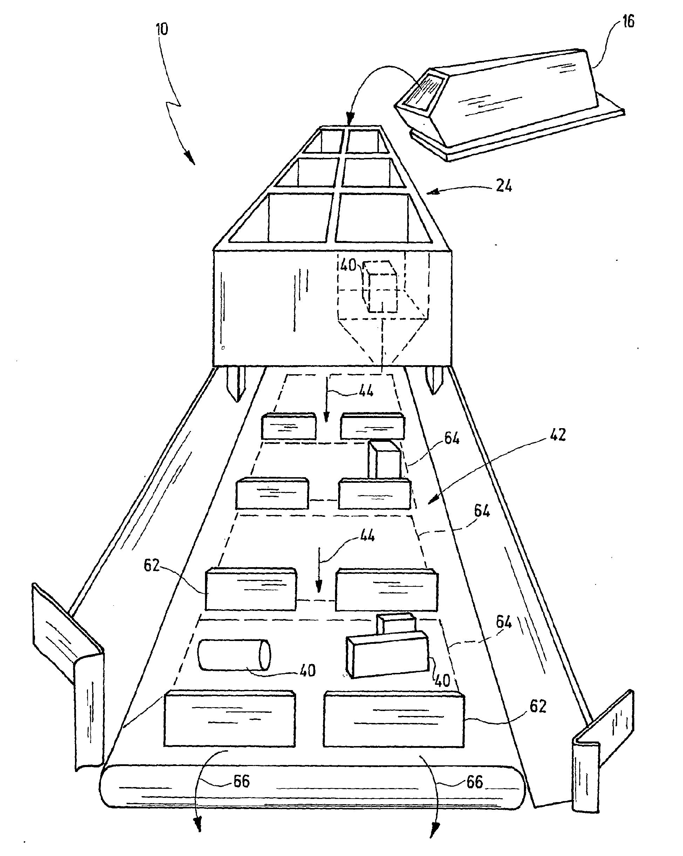

Fig. 6 zeigt eine weitere perspektivische, schematische Ansicht eines Kommissionierplatzes 10 gemäß der vorliegenden Erfindung, wobei man entlang einer Längsachse des Gurtbandes 42 auf den Kommissionierplatz 10 blickt.

An dem Gurtband 42 sind Unterteilungen, wie z.B. Leisten 62, vorgesehen, die das Gurtband 42 in Abschnitte 64 aufteilt.

Da das Gurtband 42 in der Regel mit einer konstanten Geschwindigkeit endlos umläuft, kann es passieren, dass Artikel 40 bei Freigabe durch einen Kommissionierschacht 24 auf das Gurtband 42 fallen und auf Grund ihrer Trägheit auf dem sich bewegenden Gurtband 42 entgegen der Bewegungsrichtung des Gurtbands verrutschen.

Um zu verhindern, dass Artikel 40 zu weit auf dem Gurtband 42 verrutschen, ist das Gurtband 42 durch z.B. Leisten 62 in fest vordefinierte Abschnitte 64 unterteilt. Die Abschnitte 64 wiederum können jeweils einem Auftragsbehälter 18 zugeordnet sein.

Ferner verbleibt ein Auftragsbehälter 18 so lange an einer Übergabestelle 48 (nicht dargestellt, vgl. Figuren 2 bis 4), bis alle Artikel 40, die für ihn vorgesehen sind, in Richtung von Pfeilen 66 in diesen Auftragsbehälter 18 gefallen sind.

Außerdem stellen die Leisten 62 eine optisch erfassbare Begrenzung dar, anhand derer eine Kontrolle durchgeführt werden kann. So kann bspw. über einem frei einsehbaren Bereich des Gurtbands 42, der in Förderrichtung 44 des Gurtbandes 42 nach den Kommissionierschächten 24 liegt, eine Videokamera installiert sein (nicht dargestellt). Diese Videokamera kann Momentbilder der Abschnitte 64 erfassen. Diese Bilder werden ausgewertet, um festzustellen, ob sich die richtigen Artikel 40 in diesem Abschnitt 64 befinden.

Jeder Abschnitt 64 lässt sich, wie bereits erwähnt, einem bestimmten Auftragsbehälter 18 zuordnen. Jedem Auftragsbehälter 18 ist wiederum ein Kommissionierauftrag zugeordnet. Auf diese Weise lässt sich die Überprüfung durchführen, ob ein Kommissionierauftrag richtig ausgeführt worden ist.

In Fig. 7 ist eine weitere Ausführungsform einer Kommissionieranlage 70 gemäß der vorliegenden Erfindung gezeigt.

Die Kommissionieranlage 70 der Fig. 7 ist ganz ähnlich zu der Kommissionieranlage 50 der Fig. 4 ausgebildet. Sie unterscheidet sich von der Kommissionieranlage 50 darin, dass die Gurtbänder 42 nicht die Artikel 40 direkt in Auftragsbehälter 18 sondern auf ein weiteres Gurtband 68 transportieren.

Dieses weitere Gurtband 68 wiederum transportiert die auf ihm abgelegten Artikel 40 zu einer Übergabestelle 48, an der die Auftragsbehälter 18 zur Kommissionierung bereitgestellt werden.

Es versteht sich, dass mehrere Stufen von Gurtbändern hintereinander geschaltet werden können, um immer mehr Teile eines Kommissionierauftrags zusammenzuführen.

Die in den oben genannten Ausführungsformen genannten Fördermittel lassen sich durch beliebig andere, im Stand der Technik bekannte, Fördermittel austauschen. Gleiches gilt für die Regale des Regallagers. Anstatt Karussellregalen könnten auch Hochregale verwendet werden, die z.B. gassenförmig angeordnet sind, wobei sich in den Gassen RBGs bewegen, die den Transfer der Lagerbehälter sicherstellen.

Es können auch mehrere Kommissionierplätze an ein und demselben Gurtband vorgesehen werden, um Kommissionieraufträge gleichzeitig an beliebigen Kommissionierplätzen abarbeiten zu können. Dies resultiert in einer drastischen Reduzierung der Durchlaufzeit für einen Auftrag.

## Patentansprüche

1. Kommissionieranlage (30; 50) zum Kommissionieren von Artikeln (40) in Auftragsbehälter (18), mit einem Kommissionierplatz (10), der zumindest einen Kommissionierschacht (24) aufweist, wobei erste Fördermittel (42) so angeordnet sind, dass über den Kommissionierschacht (24) direkt auf die ersten Fördermittel (42) kommissionierte, einem Kommissionierauftrag zugeordnete Artikel (40) in einen dem Kommissionierauftrag zugeordneten Auftragsbehälter (18) förderbar sind, **dadurch gekennzeichnet, dass** die ersten Fördermittel (42) Mittel (62) zum Unterteilen der ersten Fördermittel (42) in eine Vielzahl von Abschnitten (64) aufweisen, wobei jeder Kommissionierschacht (24) jeweils einem einzigen Abschnitt (64) zugeordnet ist.

2. Kommissionieranlage nach Anspruch 1, **dadurch gekennzeichnet, dass** die Mittel (62) zum Unterteilen an den ersten Fördermitteln (42) angebrachte Leisten (62) sind.

3. Kommissionieranlage nach einem der vorherigen Ansprüche, **dadurch gekennzeichnet, dass** eine Vielzahl von Kommissionierplätzen (10) vorgesehen ist, und dass zweite Fördermittel (68) so angeordnet sind, dass Artikel (40) von jeweiligen ersten Fördermitteln (42) der Vielzahl von Kommissionierplätzen (10) direkt auf den zweiten Fördermitteln (68) gesammelt werden, um die gemäß einem einzigen Kommissionierauftrag gesammelten Artikel (40) zu einem diesem Kommissionierauftrag zugeordneten Auftragsbehälter (18) zu fördern.

4. Kommissionieranlage nach einem der vorherigen Ansprüche, **dadurch gekennzeichnet, dass** der Auftragsbehälter (18) mittels einer Auftragsbehälter-Förderstrecke (20) zu einem bzw. von einem Übergabeort (48) hin bzw. weg förderbar ist, wobei sich der Übergabeort (48) bei einer Schnittstelle zwischen den ersten Fördermitteln (42) oder zweiten Fördermitteln (68) und der Auftragsbehälter-Förderstrecke (20) befindet.

5. Kommissionieranlage nach einem der vorherigen Ansprüche, **dadurch gekennzeichnet, dass** die Fördermittel (42; 68) eine endlos umlaufende Förderbahn (42; 68) aufweisen.

6. Kommissionieranlage nach Anspruch 5, **dadurch gekennzeichnet, dass** die Fördermittel (42; 68) ein Gurtband aufweisen.

7. Kommissionieranlage nach einem der vorherigen Ansprüche, **dadurch gekennzeichnet, dass** die zu kommissionierenden Artikel (40) in Lagerbehältern (16) mittels einer Lagerbehälter-Förderstrecke (14) zu dem Kommissionierplatz (10) transportierbar sind.

8. Kommissionieranlage nach einem der vorherigen Ansprüche, **dadurch gekennzeichnet, dass** an dem Kommissionierplatz (10) ferner ein Lichtelement (58) zum visuellen Anzeigen eines Quellorts und/oder eines Zielorts von zu kommissionierenden Artikeln (40) sowie ein Anzeigeelement (60) vorgesehen sind, das eine Anzahl der zu kommissionierenden Artikel (40) visuell anzeigt.

9. Kommissionierverfahren, bei dem an zumindest einem Kommissionierplatz (10) Artikel (40) über zumindest einen Kommissionierschacht (24) in Auftragsbehälter (18) kommissioniert werden, indem zu kommissionierende Artikel (40) in dem Kommissionierschacht (24) gesammelt werden, mit den folgenden Schritten: Entleeren des Kommissionierschachts (24) direkt auf erste Fördermittel (42); Transportieren der entleerten Artikel (40) zu einem Auftragsbehälter (18) hin; und Übergeben der Artikel an den Auftragsbehälter (18), **gekennzeichnet durch** die Schritte: Unterteilen des ersten Fördermittels (42) in eine Vielzahl von Abschnitten (64) und jedem Kommissionierschacht (24) jeweils einem einzigen Abschnitt 64 zuordnen.

## Claims

1. A picking system (30; 50) for order picking articles (40) into order containers (18), comprising a picking station (10) having at least one picking bucket (24), wherein first conveying means (42) are arranged such that articles (40), which are associated with a picking order, picked via the picking bucket (24) directly onto the first conveying means (42) are conveyable into an order container (18) associated with the picking order, **characterized in that** the first picking means (42) comprise means (62) for dividing the first picking means (42) into a plurality of sections (64), wherein each picking bucket (24) respectively is associated with one single section (64).

2. The picking system of claim 1, **characterized in that** the means (62) for dividing are bars (62) which are attached to the first conveying means (42).

3. The picking system of one of the proceeding claims, **characterized in that** a plurality of picking stations (10) is provided, and second conveying means (68) are arranged such that articles (40) are collected directly on the second conveying means (68) from respective first conveying means (42) of the plurality of picking stations (10), in order to convey the articles (40), which are collected according to one single picking order, to an order container (18) associated with the picking order.

4. The picking system of any of the proceeding claims, **characterized in that** the order containers (18) are conveyable to and from a handing-over point (48), respectively, by means of an order-container conveying track (20), wherein the handing-over point (48) is located at an intersection between the first conveying means (42) or the second conveying means (48) and the order-container conveying track (20).

5. The picking system of any of the proceeding claims, **characterized in that** the conveying means (42; 68) comprise an endlessly-rotating conveying track (42; 68).

6. The picking system of claim 5, **characterized in that** the conveying means (42; 68) comprise a belt.

7. The picking system of any of the proceeding claims, **characterized in that** the articles (40) in storage containers (16), which are to be picked, are transportable to the picking station (10) by means of a storage-container conveying track (14).

8. The picking system of any of the proceeding claims, **characterized in that**, at the picking station (10), a light element (58) for visually indicating a source location and/or a destination of articles (40) to be picked as well as a display element (60) indicating visually a number of the articles (40) to be picked are provided.

9. A method for order picking articles (40) at at least one picking station (10) via at least one picking bucket (24) into order containers (18), by collecting articles (40) to be picked in the picking bucket (24), comprising the following steps: releasing the picking bucket (24) directly onto first conveying means (42); transporting the released articles (40) towards an order container (18); and handing over the articles to the order container (18), **characterized by** dividing the first conveying means (42) into a plurality of sections (64), and associating each picking bucket (24) with one single section (64).

## Revendications

1. Installation de préparation (30 ; 50) pour la préparation d'articles (40) dans des conteneurs de commande (18), avec un poste de préparation (10), qui présente au moins une gaine de préparation (24), des premiers moyens d'acheminement (42) étant disposés de telle sorte que des articles (40) affectés à un ordre de préparation et préparés directement sur les premiers moyens d'acheminement (42) peuvent être acheminés par le biais de la gaine de préparation (24) dans un conteneur de commande (18) affecté à un ordre de préparation, **caractérisée en ce que** les premiers moyens d'acheminement (42) présentent des moyens (62) destinés à diviser les premiers moyens d'acheminement (42) en une pluralité de sections (64), chaque gaine de préparation (24) étant affectée à une section unique (64).

2. Installation de préparation selon la revendication 1, **caractérisée en ce que** les moyens (62) de division sont des baguettes (62) disposées sur les premiers moyens d'acheminement (42).

3. Installation de préparation selon l'une quelconque des revendications précédentes, **caractérisée en ce qu'**il est prévu une pluralité de postes de préparation (10), et **en ce que** des seconds moyens d'acheminement (68) sont disposés de telle sorte que des articles (40) sont rassemblés par les premiers moyens d'acheminement (42) respectifs de la pluralité de postes de préparation (10) directement sur les seconds moyens d'acheminement (68), afin d'acheminer les articles (40) rassemblés conformément à un ordre de préparation unique vers un conteneur de commande (18) affecté à cet ordre de préparation.

4. Installation de préparation selon l'une quelconque des revendications précédentes, **caractérisée en ce que** le conteneur de commande (18) peut être acheminé au moyen d'une voie de transport (20) de conteneur de commande jusqu'à ou à partir d'un lieu de transfert (48), le lieu de transfert (48) se trouvant à un point d'intersection entre les premiers moyens d'acheminement (42) ou les seconds moyens d'acheminement (68) et la voie de transport (20) de conteneur de commande.

5. Installation de préparation selon l'une quelconque des revendications précédentes, **caractérisée en ce que** les moyens d'acheminement (42 ; 68) présentent une voie d'acheminement tournante sans fin (42 ; 68).

6. Installation de préparation selon la revendication 5, **caractérisée en ce que** les moyens d'acheminement (42 ; 68) présentent une bande souple.

7. Installation de préparation selon l'une quelconque des revendications précédentes, **caractérisée en ce que** les articles (40) à préparer peuvent être transportés dans des conteneurs de stockage (16) au moyen d'une voie de transport (14) de conteneurs de stockage jusqu'au poste de préparation (10).

8. Installation de préparation selon l'une quelconque des revendications précédentes, **caractérisée en ce qu'**il est en outre prévu au poste de préparation (10) un élément lumineux (58) pour l'indication visuelle d'un lieu source et/ou d'un lieu cible d'articles (40) à préparer, ainsi qu'un élément d'affichage (60), qui affiche visuellement un nombre d'articles (40) à préparer.

9. Procédé de préparation, dans lequel au niveau d'au moins un poste de préparation (10), des articles (40) sont préparés par le biais d'au moins une gaine de préparation (24) dans un conteneur de commande (18), dans lequel les articles (40) à préparer sont rassemblés dans la gaine de préparation (24), avec les étapes suivantes consistant à : vider la gaine de préparation (24) directement sur les premiers moyens d'acheminement (42); transporter les articles (40) vidés vers un conteneur de commande (18); et délivrer les articles au conteneur de commande (18), **caractérisé par** les étapes consistant à : diviser les premiers moyens d'acheminement (42) en une pluralité de sections (64) et affecter chaque gaine de préparation (24) à une section unique (64).
